# EUROPÄISCHE PATENTSCHRIFT

(11) **EP 1 627 157 B1**
(45) Veröffentlichungstag und Bekanntmachung des Hinweises auf die Patenterteilung: **30.08.2006**
(21) Anmeldenummer: 04733536.9
(22) Anmeldetag: 18.05.2004
(51) Int. Cl.: F16C 19/54

(54) **RADIAL-AXIAL-LAGER**
RADIAL-AXIAL BEARING
ENSEMBLE COMBINE PALIER RADIAL-PALIER AXIAL

(30) Priorität: 27.05.2003 US 473544 P; 27.02.2004 DE 102004009648
(43) Veröffentlichungstag der Anmeldung: 22.02.2006
(73) Patentinhaber: Schaeffler KG, 91074 Herzogenaurach (DE)
(72) Erfinder: GRESLEY, Ross A., Tega Cay, SC 29708 (US)
(86) Internationale Anmeldenummer: PCT/EP2004/005350
(87) Internationale Veröffentlichungsnummer: WO 2004/106757

(56) Entgegenhaltungen:
- DE-U- 20 007 849
- FR-A- 1 377 209
- US-A- 4 971 460
- US-A- 5 829 890

## Beschreibung

### Anwendungsgebiet der Erfindung

Die Erfindung betrifft ein Radial-Axial-Lager, bestehend aus einem in einer zylindrischen Hülse aufgenommenen Radiallager mit zylindrischen Wälzkörpern und einem Axiallager mit zylindrischen Wälzkörpern, die beide zu einer unverlierbaren Baueinheit verbunden sind.

### Hintergrund der Erfindung

Ein derart gattungsgemäß ausgebildetes kombiniertes Radial-Axial-Lager ist aus der DE-OS 20 47 421 vorbekannt. Die in Figur 2 dargestellte Lagerung zur Aufnahme radialer und axialer Kräfte besteht aus einem in einer zylindrischen Hülse aufgenommenen Radialnadellager, dessen Wälzkörper in einem Käfig gehalten und geführt sind. Rechtsseitig ist in die zylindrische Hülse eine erste Laufscheibe eingesetzt, die als Laufbahn für ein Axialwälzlager dient, dessen Lagernadeln wiederum in einem Käfig geführt sind. Zum Axiallager gehört eine weitere Laufscheibe, die mit der ersten Laufscheibe durch Umbördelung verbunden ist. Auf diese Weise ist eine komplette unverlierbare aus Radial- und Axiallager bestehende Baueinheit gebildet.

Nachteilig dabei ist, dass bei einer solchen Lageranordnung nach dem bisherigen Stand der Technik durch die Anordnung von Radial- und Axiallager zueinander ein großer radialer Bauraum benötigt wird, der in bestimmten Einbausituationen nicht immer verfügbar ist. Es ist weiter von Nachteil, dass sich ein solch gattungsgemäß ausgebildetes Lager aus drei relativ kompliziert geformten Bauteilen zusammensetzt, die in aufwändiger Weise miteinander zu einer unverlierbaren Lagerbaueinheit verbunden werden müssen.

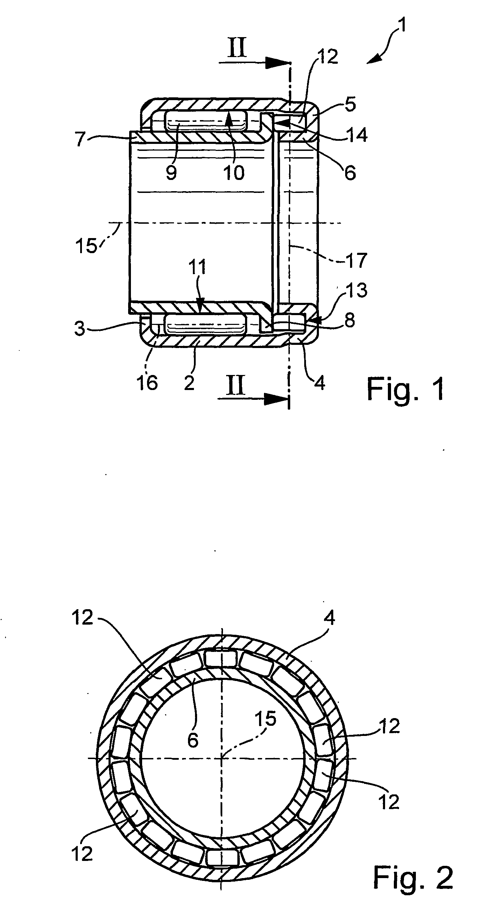

Ein anderes gattungsgemäß ausgebildetes Radial-Axial-Lager ist aus der DE 68 08 805 U bekannt geworden. Dessen Außenring für die in einem Käfig geführten Nadeln des Radiallagers gemäß Figur 1 ist an einem Ende mit einem radial nach innen gerichteten Bord versehen und geht am anderen Ende in einen radial nach außen verlaufenden Flansch über, der als Laufscheibe für die im Käfig geführten Nadeln des Axiallagers dient und an seinem Ende einen axial gerichteten Kragen aufweist. Die lose Laufscheibe ist in der Bohrung mit einem axial gerichteten Kragen ausgestattet, an dem mehrere gleichmäßig über den Umfang verteilte Eindrückungen vorgesehen sind. Diese Eindrückungen greifen hinter den Absatz eines in den Außenring eingefügten Rings aus Blech, der am anderen Ende einen radial nach innen gerichteten Bord aufweist. Durch die beiden Borde wird der Käfig axial geführt und durch den Absatz wird die lose Laufscheibe gehalten, so dass das Lager eine geschlossene Baueinheit bildet.

Auch für diese Lageranordnung treffen die vorstehend genannten Nachteile zu, d. h., dieses Radial-Axial-Lager braucht ebenfalls einen großen radialen Bauraum.

Aus der FR-A-1377209 ist ein Radial-Axial-Large bekannt, der dem Oberbegriff des Anspruchs 1 entspricht.

### Zusammenfassung der Erfindung

Ausgehend von den Nachteilen des bisherigen Standes der Technik liegt der Erfindung daher die Aufgabe zu Grunde, eine kompakte Wälzlagerung mit einem Radialrollenlager und einem Axialrollenlager zu schaffen, bei der unter günstigster Ausnutzung eines vorgegebenen Bauraums eine maximale Tragfähigkeit in radialer und in axialer Richtung erzielt wird.

Erfindungsgemäß wird diese Aufgabe nach dem kennzeichnenden Teil von Anspruch 1 in Verbindung mit dessen Oberbegriff dadurch gelöst.

Der entscheidende Vorteil der erfindungsgemäß ausgebildeten Lageranordnung liegt darin, dass die gleichzeitige Aufnahme von radialen und axialen Lasten mit einem nicht vergrößerten radialen Bauraum erkauft werden muss. Durch die spezielle Anordnung und Ausbildung der Wälzkörper des Radiallagers und des Axiallagers wird die kombinierte Lagerbaueinheit sowohl in axialer als auch in radialer Richtung von der zylindrischen Hülse aufgenommen, so dass Radial- und Axialkräfte in einem eng begrenzten Raum aufnehmbar sind.

Ein weiterer Vorteil ergibt sich dadurch, dass die gesamte Lageranordnung aus wenigen Lagerbauteilen besteht, die relativ einfache geometrische Formen aufweisen und dadurch kostengünstig herstellbar sind. Daraus ergibt sich als weiterer Vorteil eine wesentlich vereinfachte Montage der gesamten Anordnung, die die Gestehungskosten der Lagerbaueinheit nochmals senkt.

Weitere vorteilhafte Ausführungsvarianten der Erfindung sind in den Unteransprüchen 2 bis 7 beschrieben.

So ist nach Anspruch 2 vorgesehen, dass die Wälzkörper des Radiallagers ein kleineres Verhältnis von Durchmesser zur Länge als die Wälzkörper des Axiallagers aufweisen.

In weiterer Ausbildung der Erfindung gemäß Anspruch 3 sollen die Wälzkörper des Radiallagers als Nadeln mit einem Verhältnis von Durchmesser zu Länge von 1:2,5 bis 1:10 ausgebildet sein.

Nach einem weiteren anderen Merkmal gemäß Anspruch 4 soll der radial nach innen weisende Bord der zylindrischen Hülse mit einem axial nach innen weisenden Flansch versehen sein. Auf diese Weise ist sichergestellt, dass die Wälzkörper des Axiallagers bei fehlendem Lagerkäfig nicht in radialer Richtung nach innen herausfallen können.

Aus den Ansprüchen 5 und 6 geht hervor, dass die Wälzkörper des Radiallagers und die Wälzkörpers des Axiallageres in je einem Käfig geführt sind.

Schließlich ist nach einem letzten Merkmal der Erfindung gemäß Anspruch 7 vorgesehen, dass die zylindrische Hülse und der Innenring durch einen spanlosen Formgebungsvorgang hergestellt sein sollen. Auf diese Weise lassen sich kostengünstig die betreffenden Bestandteile der Gesamtlageranordnung herstellen.

Die Erfindung wird an nachstehenden Ausführungsbeispielen näher erläutert.

### Kurze Beschreibung der Zeichnungen

Es zeigen:
- Figuren 1, 3, 5 und 7: je einen Längsschnitt durch eine erfindungsgemäß ausgestaltete Lagervariante und
- Figuren 2, 4, 6 und 8: je einen Querschnitt entlang der Linien II-II, IV-IV, VI-VI und VIII-VIII in den Figuren 1, 3, 5 und 7.

### Ausführliche Beschreibung der Zeichnungen

Das in den Figuren 1 und 2 dargestellte, mit 1 bezeichnete und um eine Lagerachse 15 rotierende vollrollige Radial-Axial-Lager setzt sich aus der zylindrischen Hülse 2 und dem Innenring 7 zusammen, die sich in axialer Richtung überlappen und beide durch einen spanlosen Formgebungsvorgang hergestellt sind. Zur Lageranordnung 1 gehören weiter die axial ausgerichteten als Lagernadeln ausgebildete Wälzkörper 9 zur Aufnahme von Radialkräften und die radial ausgerichteten Wälzkörper 12 zur Aufnahme von Axialkräften. Wie weiter erkennbar, geht die zylindrische Hülse 2 an ihrem linksseitigen Ende in den radial nach innen gerichteten Bord 3 über, während sie rechtsseitig durch den zylindrischen Abschnitt 4 fortgesetzt ist, dessen Durchmesser geringfügig kleiner als der Durchmesser der übrigen zylindrischen Hülse 2 ist. Dieser zylindrische Bereich 4 geht in den radial nach innen gerichteten Bord 5 über, der wiederum vom axial einwärts gerichteten Flansch 6 fortgesetzt ist, wobei dessen Innendurchmesser geringfügig größer als der Innendurchmesser des Innenringes 7 ist. Auf diese Weise ist sichergestellt, dass bei einer in einem nicht dargestellten Gehäuse eingepressten zylindrischen Hülse eine vom Innenring 7 aufgenommene, ebenfalls nicht dargestellte Welle nicht mit der fest eingepressten Hülse 2 in Kontakt steht. Der Innenring 7 ist an seinem rechtsseitigen Ende mit dem radial nach außen gerichteten Bord 8 versehen, wobei für die Wälzkörper 9 des Radiallagers die Außenlaufbahn 10 durch die zylindrische Hülse 2 und die Innenlaufbahn 11 durch den Innenring 7 gestellt ist. Die Außenlaufbahn 13 der zylindrischen Wälzkörper 12 des Axiallagers ist durch den Bord 5 der zylindrischen Hülse 2 gestellt, während die Innenlaufbahn 14 durch den Bord 8 des Innenringes gebildet ist.

Wie die Figur 1 auch zeigt, weisen die als Lagernadeln ausgebildeten zylindrischen Wälzkörper 9 des Radiallagers ein Verhältnis von Durchmesser zu Länge von etwa 1:4 auf, während die zylindrischen Wälzkörper 12 des Axiallagers ein Verhältnis von etwa 1:0,6 aufweisen. Im Sinne der Erfindung kann in diesem Zusammenhang von einer tablettenförmigen Ausbildung der zylindrischen Wälzkörper 12 gesprochen werden. Es ist auch erkennbar, dass die radiale Ausdehnung der zylindrischen Wälzkörper 12 des Axiallagers geringfügig kleiner als die radiale Ausdehnung der Wälzkörper 9 des Radiallagers ist, d. h., geringfügig kleiner als deren Durchmesser ist. Die radiale Ausdehnung der zylindrischen Wälzkörper 12 des Radiallagers wird sich dabei nach dem Durchmesser der zylindrischen Wälzkörper 9 des Radiallagers richten. Je größer deren Durchmesser ist, um so dicker können auch die Wälzkörper 12, betrachtet in Richtung ihrer Drehachse 17, sein. Die Verlängerungen der waagerecht verlaufenden Drehachsen 16 der zylindrischen Wälzkörper 9 des Radiallagers schneiden die senkrecht verlaufenden Drehachsen 17 der zylindrischen Wälzkörper 12 des Axiallagers im Zentrum bzw. nahezu im Zentrum der Wälzkörper 12. Auf diese Weise ist sichergestellt, dass einerseits kein zusätzlicher radialer Bauraum benötigt und andererseits relativ hohe Axiallasten übertragen werden können. Zylindrische Wälzkörper 12 mit einem großem Verhältnis von Durchmesser zu axialer Länge ermöglichen es dem kombinierten Lager, die Axiallasten in einem nahezu gleichgroßen Bauraum wie das Radiallager selbst aufzunehmen. Die Verwendung von Rollen 12 in Tablettenform für die Aufnahme von Axiallasten ist außerdem vorteilhaft, weil deren Durchmesservergrößerung eine größere Auswirkung auf die dynamische Tragfähigkeit als deren Längenausdehnung hat.

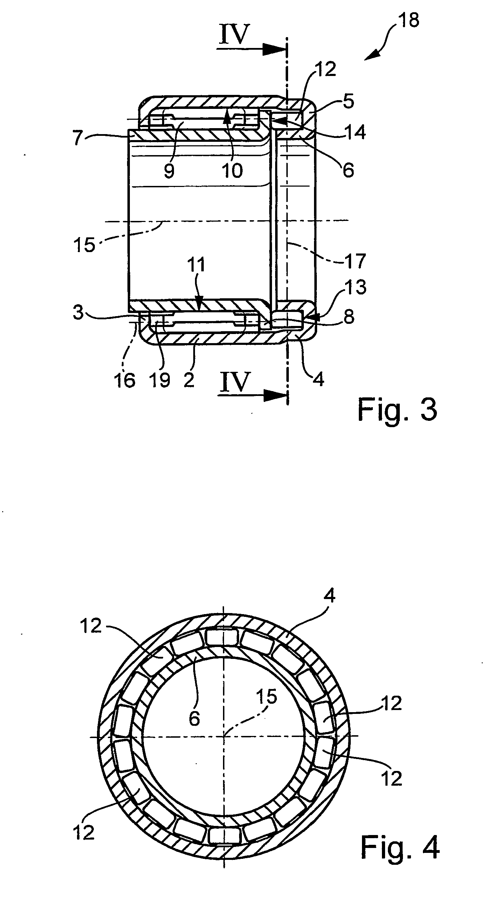

Das in den Figuren 3 und 4 dargestellte Radial-Axial-Lager 18 unterscheidet sich von dem in den Figuren 1 und 2 gezeigten Lager 1 lediglich dadurch, dass die zylindrischen Wälzkörper 9 des Radiallagers in einem Käfig 19 geführt sind.

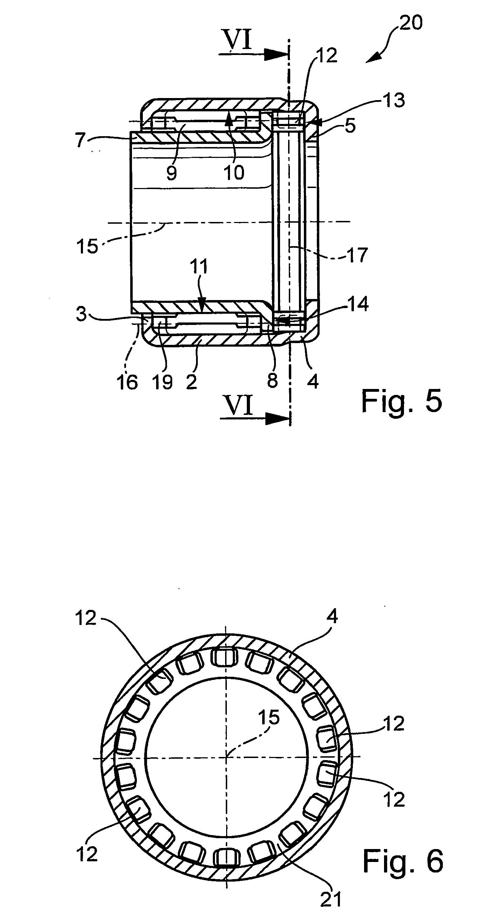

Das in den Figuren 5 und 6 gezeigte Radial-Axial-Lager 20 weist gegenüber dem in den Figuren 3 und 4 gezeigten Lager 18 einen zusätzlichen Käfig 21 auf, in dem die zylindrischen Wälzkörper 12 des Axiallagers gehalten sind. Bei dieser Ausgestaltung kann auf den Flansch 6 der zylindrischen Hülse 2 verzichtet werden.

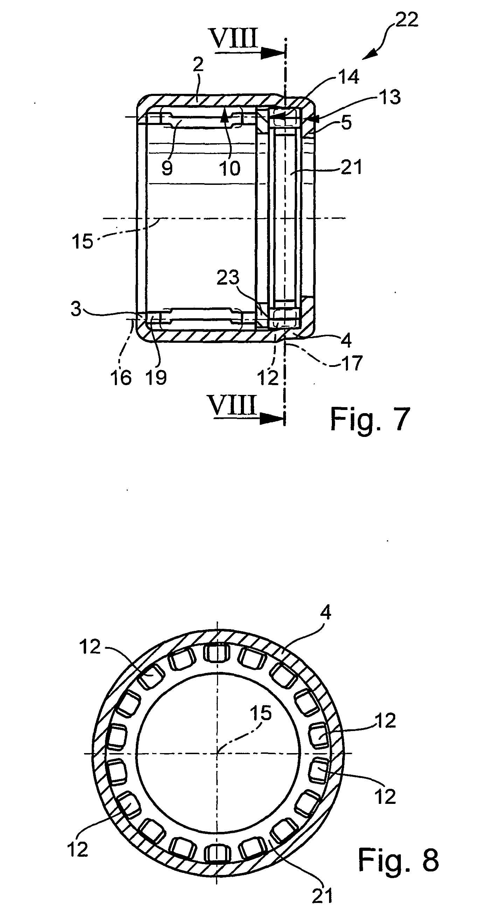

Schließlich ist in den Figuren 7 und 8 ein Radial-Axial-Lager 22 gezeigt, bei dem die Innenlaufbahn 14 der zylindrischen Wälzkörper 12 des Axiallagers durch die Laufscheibe 23 gebildet ist.

### Bezugszeichen

- 1: Radial-Axial-Lager
- 2: zylindrische Hülse
- 3: Bord
- 4: zylindrischer Abschnitt
- 5: Bord
- 6: Flansch
- 7: Innenring
- 8: Bord
- 9: zylindrischer Wälzkörper
- 10: Außenlaufbahn
- 11: Innenlaufbahn
- 12: zylindrischer Wälzkörper
- 13: Außenlaufbahn
- 14: Innenlaufbahn
- 15: Lagerachse
- 16: Drehachse
- 17: Drehachse
- 18: Radial-Axial-Lager
- 19: Käfig
- 20: Radial-Axial-Lager
- 21: Käfig
- 22: Radial-Axial-Lager
- 23: Laufscheibe

## Patentansprüche

1. Radial-Axial-Lager (1, 18, 20, 22), bestehend aus einem in einer zylindrischen Hülse (2) aufgenommenen Radiallager mit zylindrischen Wälzkörpern (9) und einem Axiallager mit zylindrischen Wälzkörpern (12), die beide zu einer unverlierbaren Baueinheit verbunden sind, wobei eine Außenlaufbahn (13) des Axiallagers durch einen radial nach innen weisenden Bord (5) der zylindrischen Hülse (2) gebildet ist, der sich an einen axial nach außen ragenden zylindrischen Abschnitt (4) der Hülse (2) anschließt, während eine Innenlaufbahn (14) des Axiallagers durch einen radial nach außen weisenden Bord (8) eines Innenringes (7) des Radiallagers oder durch eine Laufscheibe (23) gebildet ist, **dadurch gekennzeichnet, dass** sich Verlängerungen von Drehachsen (16) der zylindrischen Wälzkörper (9) des Radiallagers mit Drehachsen (17) der zylindrischen Wälzkörper (12) des Axiallagers in einem Zentrum der zylindrischen Wälzkörper (12) des Axiallagers schneiden.

2. Radial-Axial-Lager (1, 18, 20, 22) nach Anspruch 1, **dadurch gekennzeichnet, dass** die Wälzkörper (9) des Radiallagers ein kleineres Verhältnis von Durchmesser zu Länge als die Wälzkörper (12) des Axiallagers aufweisen.

3. Radial-Axial-Lager (1, 18, 20, 22) nach Anspruch 1, **dadurch gekennzeichnet, dass** die Wälzkörper (9) des Radiallagers als Nadeln mit einem Verhältnis von Durchmesser zu Länge von 1:2,5 bis 1:10 ausgebildet sind.

4. Radial-Axial-Lager (1, 18) nach Anspruch 1, **dadurch gekennzeichnet, dass** der radial nach innen weisende Bord (5) der zylindrischen Hülse (2) mit einem axial nach innen weisenden Flansch (6) versehen ist.

5. Radial-Axial-Lager (18, 20) nach Anspruch 1, **dadurch gekennzeichnet, dass** die Wälzkörper (9) des Radiallagers in einem Käfig (19) geführt sind.

6. Radial-Axial-Lager (20, 22) nach Anspruch 1, **dadurch gekennzeichnet, dass** die Wälzkörper (12) des Axiallagers in einem Käfig (21) geführt sind.

7. Radial-Axial-Lager (1, 18, 20, 22) nach Anspruch 1, **dadurch gekennzeichnet, dass** die zylindrische Hülse (2) und der Innenring (7) durch einen spanlosen Formgebungsvorgang hergestellt sind.

## Claims

1. Radial/axial bearing (1, 18, 20, 22) consisting of a radial bearing received in a cylindrical sleeve (2) and having cylindrical rolling bodies (9) and of an axial bearing having cylindrical rolling bodies (12), said radial bearing and said axial bearing being connected to form a captive structural unit, an outer running track (13) of the axial bearing being formed by a radially inward-pointing rim (5) of the cylindrical sleeve (2), said rim adjoining an axially outward-projecting cylindrical portion (4) of the sleeve (2), while an inner running track (14) of the axial bearing is formed by a radially outward-pointing rim (8) of an inner ring (7) of the radial bearing or by a running disk (23), **characterized in that** prolongations of axes of rotation (16) of the cylindrical rolling bodies (9) of the radial bearing intersecting with axes of rotation (17) of the cylindrical rolling bodies (12) of the axial bearing at a centre of the cylindrical rolling bodies (12) of the axial bearing.

2. Radial/axial bearing (1, 18, 20, 22) according to Claim 1, **characterized in that** the rolling bodies (9) of the radial bearing have a smaller ratio of diameter to length than the rolling bodies (12) of the axial bearing.

3. Radial/axial bearing (1, 18, 20, 22) according to Claim 1, **characterized in that** the rolling bodies (9) of the radial bearing are designed as needles with a ratio of diameter to length of 1:2.5 to 1:10.

4. Radial/axial bearing (1, 18) according to Claim 1, **characterized in that** the radially inward-pointing rim (5) of the cylindrical sleeve (2) is provided with an axially inward-pointing flange (6).

5. Radial/axial bearing (18, 20) according to Claim 1, **characterized in that** the rolling bodies (9) of the radial bearing are guided in a cage (19).

6. Radial/axial bearing (20, 22) according to Claim 1, **characterized in that** the rolling bodies (12) of the axial bearing are guided in a cage (21).

7. Radial/axial bearing (1, 18, 20, 22) according to Claim 1, **characterized in that** the cylindrical sleeve (2) and the inner ring (7) are produced by means of a noncutting shaping operation.

## Revendications

1. Palier radial et axial (1, 18, 20, 22) constitué d'un palier radial comportant des corps de roulement cylindriques (9) logé dans une douille cylindrique (2) et d'un palier axial comportant des corps de roulement cylindriques (12), lesquels paliers sont reliés de manière à former une unité de construction imperdable, une voie de roulement extérieure (13) du palier axial étant formée par un bord (5) de la douille cylindrique (2) dirigé radialement vers l'interieur, lequel est contigu à un tronçon cylindrique (4) de la douille (2) qui s'étend axialement vers l'extérieur, tandis qu'une voie de roulement intérieure (14) du palier axial est formée par un bord (8) d'une bague intérieure (7) du palier radial dirigé radialement vers l'extérieur ou par un disque de roulement (23), **caractérisé en ce que** des prolongements d'axes de rotation (16) des corps de roulement cylindriques (9) du palier radial et des axes de rotation (17) des corps de roulement cylindriques (12) du palier axial se coupent en un centre des corps de roulement cylindriques (12) du palier axial.

2. Palier radial et axial (1, 18, 20, 22) selon la revendication 1, **caractérisé en ce que** les corps de roulement (9) du palier radial présentent un rapport entre leur diamètre et leur longueur plus petit que celui des corps de roulement (12) du palier axial.

3. Palier radial et axial (1, 18, 20, 22) selon la revendication 1, **caractérisé en ce que** les corps de roulement (9) du palier radial sont conformés en tant qu'aiguilles présentant un rapport entre leur diamètre et leur longueur de 1:2,5 jusqu'à 1:10.

4. Palier radial et axial (1, 18) selon la revendication 1, **caractérisé en ce que** le bord (5) de la douille cylindrique (2) dirigé radialement vers l'intérieur est pourvu d'une collerette (6) dirigée axialement vers l'intérieur.

5. Palier radial et axial (18, 20) selon la revendication 1, **caractérisé en ce que** les corps de roulement (9) du palier radial sont guidés dans une cage (19).

6. Palier radial et axial (20, 22) selon la revendication 1, **caractérisé en ce que** les corps de roulement (12) du palier axial sont guidés dans une cage (21).

7. Palier radial et axial (1, 18, 20, 22) selon la revendication 1, **caractérisé en ce que** la douille cylindrique (2) et la bague intérieure (7) sont fabriquées par un procédé de formage sans copeaux.
